# EUROPEAN PATENT SPECIFICATION

(11) **EP 3 394 492 B1**
(45) Date of publication and mention of the grant of the patent: **02.10.2019**
(21) Application number: 15828502.3
(22) Date of filing: 23.12.2015
(51) Int. Cl.: F16L 5/12, F16L 37/14, F16L 25/00

(54) **A FITTING ASSEMBLY FOR CORRUGATED TUBING**
ARMATURENANORDNUNG FÜR WELLSCHLÄUCHE
ENSEMBLE RACCORD POUR TUBE ONDULÉ

(43) Date of publication of application: 31.10.2018
(73) Proprietor: Gebwell Oy, 79100 Leppävirta (FI)
(72) Inventor: AHLFORS, Mikko, 78880 Kuvansi (FI)
(74) Representative: Berggren Oy, Tampere
(86) International application number: PCT/FI2015/050941
(87) International publication number: WO 2017/109270

(56) References cited:
- EP-A2- 0 474 114
- CH-A- 363 864
- DE-U1- 20 008 148
- FR-A1- 2 674 310
- US-A- 3 479 069
- US-A- 4 423 891

## Description

### Field of the invention

The present invention relates to a fitting assembly for corrugated tubing.

### Background of the invention

Corrugated stainless steel tubing (CSST) was developed during 1980's in Japan and is today highly growing technology employed among others, in natural gas distribution and electricity wiring applications. Due to flexibility of the wall of such corrugated metal tube, the installation of the metal tubing formed of corrugated tubes is remarkably simpler and easier to carry out than installation of the respective tubing by using traditional metal tubes having straight walls requiring formation of bends in each such locations where the tube line has to change its direction. Among others, for this reason application of the CSST technology has substantially reduced installation time and thus labor costs in all those applications where it has replaced the traditional tubing technologies employing the tubes with a straight wall.

During the last decades plurality of fitting assemblies (or fittings) have been developed to ensure secure attachment and proper tightness in joints between corrugated tubes or hoses and the equipment to which the corrugated tubing is intended to be connected. A drawback of the presently known fittings is that, in some applications such as in installations of such apparatuses where a corrugated tube is led out from inside a container or casing being filled with pressurized medium (e.g. in heat exchangers and heat accumulators), the components of the known fittings typically remain inside the walls of the pressurized container and hence cannot be monitored by using visual inspection (e.g. in order to determine its condition or need for maintenance) or, in case of failure, repaired without dismantling the cover of such apparatuses. Furthermore, the presently known fitting assemblies for connecting the corrugated tubes with other equipment of installation typically include several components separate from each other such as nuts, sealing rings, washers, locking rings and locking pins and/or corresponding elements. Therefore, many fittings exist that are rather complex in construction and thus cumbersome to install and maintain, especially in such installations where the fitting has to be installed in to the inner side of a container or casing.

A known assembly for corrugate tubing is disclosed in CH363864A. In this construction a sealing element is pressed between the inner and outer sleeves for sealing and fixing the corrugate tube.

### Brief description of the invention

The aim of the invention is to provide a fitting assembly by means of which a corrugated tube that has been led out from inside an object (i.e. e.g. a casing or a container) can be realized in such a way that components of the fitting can be placed on the outer side of the object so that visual inspection, servicing and reconditioning of the fitting during its service life is possible without dismantling the cover of the object. The aim of the present invention is also to form a fitting assembly for corrugated tubing that is simpler in construction and has less separate components than the known fitting assemblies used for corrugated tubes led out from inside an object such as a casing or a container.

The aim of the present invention is achieved because in the fitting assembly according to invention, the part of the fitting assembly to which the corrugated tube is sealably attachable, is configured such that when the corrugated tube is attached in to this portion, the corrugated tube extends in the direction of the end of the fitting assembly that will be attached to the opening of the object to which the fitting has been attached. Therefore, when the corrugated tube is attached to a wall of the object, the fitting assembly is located on the outer side of the object if the corrugated tube extends from the opening in to the object. To put it more precisely, the fitting assembly according to invention is described in the independent claim 1. The dependent claims 2-10 describe advantageous embodiments of the fitting assembly according to the invention.

The advantage of the fitting assembly according to present invention is that by means of it, the coupling of a corrugated tubing being led out from inside a casing or a container (typically having pressure that differs from ambient pressure) can be formed in such a way that the components used in the fitting assembly between the corrugated tube and the casing or the container can be realized such manner that all these components remain outside the outer walls of the casing or container and are able to be inspected by visual inspection and, when necessary, repaired or serviced within the lifetime of the apparatus in question. Furthermore, the further advantage of the invention is that installation of corrugated tubing becomes easier, simpler and less time consuming, especially in the case of installations with apparatuses where the corrugated tube is led out from inside a casing or container.

### Description of the drawings

Next the invention is described in more detail by referring to the attached drawings wherein
- figure 1: shows a cross section of a first embodiment of the fitting assembly according to the invention assembled to an object seen obliquely from above of the object,
- figure 2: shows a perspective drawing of the first embodiment of the fitting assembly according to figure 1,
- figure 3: shows a front view of the fitting assembly according to figures 1 and 2,
- figure 4: shows a longitudinal cross-section of the fitting assembly of figures 1 to 3,
- figure 5: shows a longitudinal cross-section of a second embodiment of the fitting assembly according to invention assembled to an object,
- figure 6: shows a front view of the fitting assembly according to figure 5,
- figure 7: shows a perspective drawing of a fitting assembly according to a not claimed example, and
- figure 8: shows a longitudinal cross-section of the fitting assembly according to figure 7.

### Detailed description of some advantageous embodiments

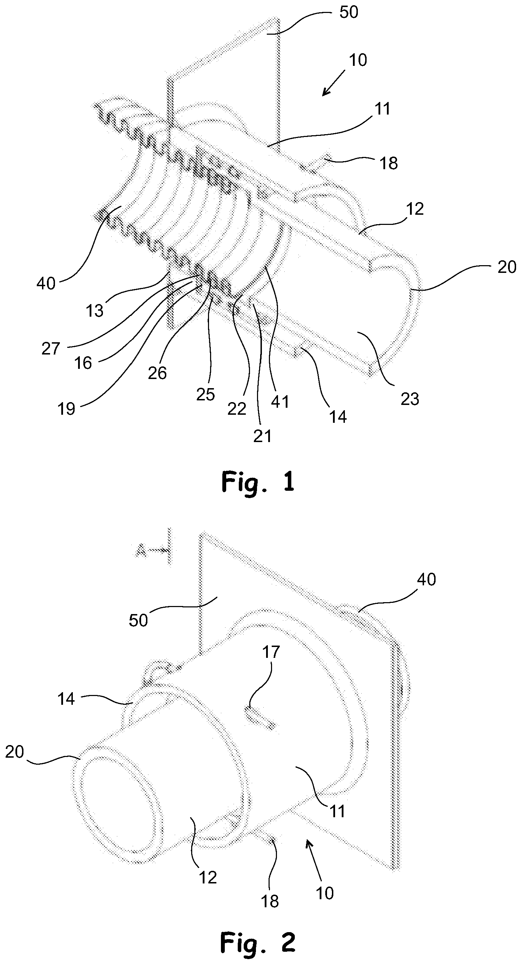

The embodiments of the fitting assembly according to invention shown in figures 1 to 4, 5 to 6 and 7 to 8 are fitting assemblies that are intended to be used for leading an corrugated tube through a wall of an object such as a container or casing, so that the corrugated tube extends out from inside the container or casing through its wall. Such situation takes place, for instance, with a heat exchanger or heat accumulator, where the heat is exchanged from or to a first heat exchange medium being inside the container or casing, or from or to a second heat exchange medium flowing in a corrugated tube arranged in to the container or casing. Typically, in such an apparatus the corrugated tube is arranged in spiral, zig zag or some other suitable form such that enough heat exchanging surface between the corrugated tube and the first heat exchanging medium is formed to exchange the desired amount of heat from the first heat exchanging medium to the second heat exchanging medium or vice versa.

The fitting assembly 10 shown in figure 1 comprises a first sleeve part 11 and a second sleeve part 12. The first sleeve part 11 is a portion of the fitting assembly 10 that is attachable to the edge of an opening 51 formed to an object 50 to which the fitting assembly is to be installed. This attachment can be accomplished fixedly by means of soldering or welding, or detachably e.g. by means of a nut and external threads formed on the outer surface of the first sleeve 11 part at its attachment end 13. However, in embodiments shown in figures 1 to 6, the object 50 to which the first sleeve 11 part is attached, is shown by means of square shaped piece of plate to which an opening 51 for the first sleeve part 11 has been formed. Herein generally described object 50 is typically a closed container or casing which should be gas and liquid tight i.e. that can have its inner side pressure being higher or lower than ambient pressure effecting outside the object 50. In both of the embodiments shown in the figures 1 to 4 and 5 to 6, the first sleeve part 11 has such type of an attachment end 13 that is configured to be fixedly attachable to the edge of an opening 51 formed to the wall of an object 50 to which the fitting assembly 10 is to be attached. The second sleeve part 12 is a portion of the fitting assembly 10 that can be fitted in to the first sleeve part 11 and to which the corrugated tube 40 can be sealably attached. The detachable connection between the first sleeve part 11 and the second sleeve part 12 has been configured such that when the second sleeve part 12 is to be fitted and secured in to the first sleeve part, gas or liquid inside the container cannot leak out from the container or casing 50 or in to the container from outside the container or casing through the connection. Also, because the corrugated tube 40 is connected in to the second sleeve part 12 through a coupling end 19 being in the side of the attachment end 13 of the first sleeve part 11, all components of the fitting assembly leave outside the object 50 in case when the corrugated tube 40 extends out from inside the object 50. This is why the embodiments of the fitting assembly according invention shown in figures 1 to 4 and 5 to 6 are able to be inspected by visual inspection and, when necessary, repaired or serviced without disassembling the object 50 within the lifetime of the entity which both of these both elements are part of.

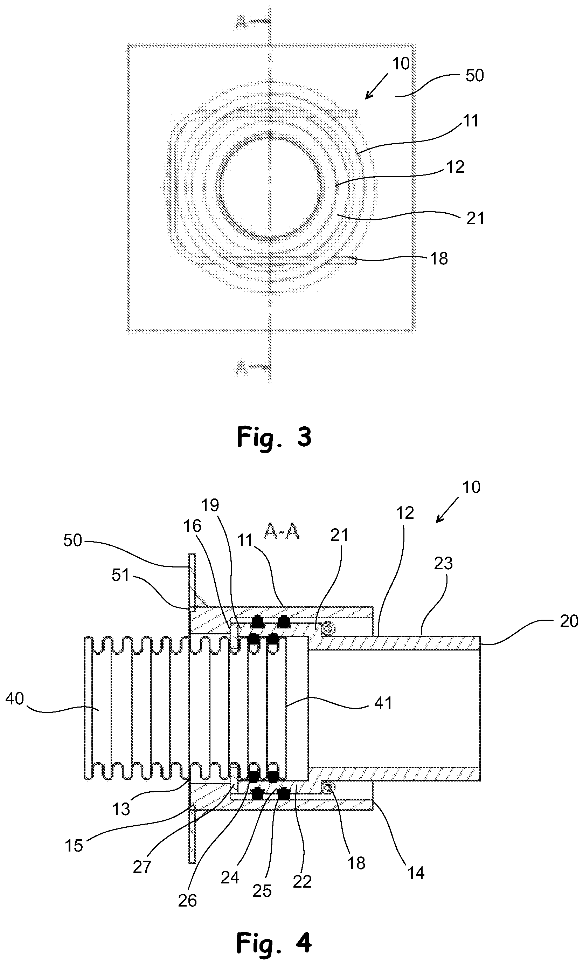

The first sleeve part 11 comprises an attachment end 13 and a receiving end 14. As described above, the attachment end 13 has been configured to be attachable to the opening formed to the object 50 to which the first sleeve part 11 is to be attached. As can be seen from figure 4 there is, in this case, formed near to the attachment end 13 of the first sleeve part 11 a narrowing at the edge such that a fixing corner 15 in to which the opening 51 having a bit smaller diameter than the outer diameter of the other portions of the first sleeve part 11 has been fitted so that the inner edge of the opening 51 becomes against the vertical edge of the fixing corner 15. This will make it easier to secure the first sleeve part 11 to the opening 51 accurately such that the first sleeve part 11 extends perpendicularly outside from the object 50. In this embodiment the attachment is accomplished by welding. However, in this kind of attachment soldering or brazing may be applied as well. Furthermore, other suitable attachment methods an means may be applied such as attachment with a ring nut screwed on the threads formed on the sleeve part 11 at the attachment end 13, so that the edge of the opening 51 can be compressed against the fixing corner 15 by means of the ring nut.

The receiving end 14 is the end through which the second sleeve part 12 is fitted in to the first sleeve part 11. At the receiving end 14, the inner diameter of the first sleeve part 11 is larger than the inner diameter at the attachment end 13. The portion with enlarged inner diameter extends near the attachment end 13 where it terminates to a locking corner 16 after which the inner diameter of the first sleeve part 11 narrows to approximately the inner diameter that is equal or e.g. some tenths of millimeters larger than outer diameter of the corrugated tube 40 to be fitted in to the fitting assembly 10. The first sleeve part 11 further comprise locking apertures 17, through which a retaining pin 18 can be fitted for locking the second sleeve part 12 such that it cannot move out from inside the first sleeve part 11. In this embodiment the retaining pin 18 is a U-shaped pin made of metal such as steel. However, retaining pins having other shapes and made of some other suitable material may also be used. For instance, one U-shaped pin may be replaced by one or more straight or L-shaped pins that can be fitted through the apertures 17, number of which can be two or more depending on the type and amount of retaining pins employed.

In the embodiment of figures 1 to 4, the retaining pin 18 is fitted through the apertures 17 after the second sleeve part 12 has been fitted in to the first sleeve part 11 in to its intended position. In that position, the parts of the retaining pin 18 being in the first sleeve part 11 remains at the outer side of a retaining corner 21 of the second sleeve part 12 and thus retains the second sleeve part 12 in the first sleeve part 11 as shown in the figures 1, 2 and 4. Furthermore, in some other embodiments having this kind of retaining pin, the retaining corner 21 may be replaced with a suitable retaining groove that is formed on the outer surface of the second sleeve part 12 at the suitable position, such that the second sleeve part 12 is retained in the first sleeve part 11 similarly as in the embodiment shown in the figures 1 to 4.

The second sleeve part 12 comprises a coupling end 19 and an extension end 20. The coupling end 19 is an end that will be fitted in to the first sleeve part 11 through the receiving end 14 of the first sleeve part 11 when the second sleeve part 12 is assembled in to the first sleeve part 11. In this embodiment, the inner and outer diameter of the second sleeve part 12 is at the coupling end 19 larger than inner and outer diameter at the extension end 20, i.e. there is a receiving portion 22 that extends from coupling end 19 to the direction of the extension end 20. The distance which the receiving portion 22 extends from the coupling end 19 to the direction of extension end 20 is less than the length of the portion of the first sleeve part 11 at the receiving end 14 having larger inner diameter than the inner diameter of the attachment end 13 of the first sleeve part 11 when the second sleeve part 12 is fitted in to its position in to the first sleeve part 11. The receiving portion 22 terminates to a retaining corner 21, after which the second sleeve part 12 extends as a terminal portion 23 having, in this embodiment, smaller inner and outer diameter than the inner and outer diameter of the receiving portion 22. The aim of this is to form a retaining corner 21, by means of which the movement of the second sleeve part 12 out from the first sleeve part 11 (i.e. in the direction of its extension end 20) can be prevented as described above. For this reason, the retaining corner 21 is positioned such that it will be in the first sleeve part 11 when the second coupling end 19 of the sleeve part 12 is against the locking corner 16 in the first sleeve part 11.

In this embodiment, the receiving portion 22 of the second sleeve part 12 comprises on its outer surface two retaining grooves 24. When the second sleeve part 12 has been fitted in to the first sleeve part 11, two sealing rings 25 have been introduced between the receiving portion 22 and the inner surface of the first sleeve part 11. The aim of the retaining grooves 24 is to retain the sealing rings 25 at the right position on the receiving portion 22 such that the sealing rings 25 provide sealing that prevents leaking of gas or liquid through the connection between the first sleeve part 11 and the second sleeve part 12. The number of retaining grooves 24 and sealing rings 25 can vary in different arrangements of the fitting. To ensure required tightness, there has to be at least one sealing ring 25 between the second sleeve part 12 and the first sleeve part 11, but in such embodiments being designed for demanding applications, three or more sealing rings 25 and retaining grooves 24 may be introduced.

The receiving portion 22 of the second sleeve part 12 provides also a sealed connection for the corrugated tube 40. In this embodiment the corrugated tube 40 will be fitted in to the receiving portion 22 through its coupling end 19. Therefore, the inner diameter of the receiving portion 22 is approximately equal to the outer diameter of the corrugated tube 40. As can be understood and seen from figures 1 and 4, the shape of the outer surface of the corrugated tube 40 provides as such retaining grooves for one or more sealing rings 26. In this embodiment, two sealing rings 26 have been introduced between the corrugated tube 40 and the receiving portion 22 in to which the incoming end 41 of the corrugated tube 40 has been fitted. Also herein minimum number of sealing rings 26 would be one but alternatively three or more sealing rings 26 may be used in such arrangements where extremely reliable sealing is needed.

In order to secure the corrugated tube 40 in to the receiving portion 22 of the second sleeve part 12, a locking ring 27 has been introduced between the outer surface of the corrugated tube 40 and the locking corner 16 of the first sleeve part 11. For preventing the corrugated tube 40 from moving in both of its lengthwise directions, the corrugated tube 40 has been positioned in respect to receiving portion 22 such that it remains (when the second sleeve part 12 is in its connected position in respect to the first sleeve part 11) between the locking corner 16 of the first sleeve part 11 and the coupling end 19 of the second sleeve part 12. Hence, in this embodiment, the locking corner 16 prevents the incoming end 41 of the corrugated tube 40 from moving in the direction of the object 50 and the coupling end 19 prevents it from moving too far inside the receiving portion 22. As can be seen from figure 4, there is some clearance between the incoming end 41 of the corrugated tube 40 and the inner edge of the terminal portion 23 of the second sleeve part 12. This is to enable adjusting the position of the incoming end 41 of the corrugated tube 40 in the receiving portion 22 such that the locking ring 27 can be assembled in suitable position in respect to the outer surface of the corrugated tube 40 (i.e. such that a narrower point of the outer surface of the corrugated tube 40 can be positioned to the point where it locates between the coupling end 19 of the second sleeve part 12 and the locking corner 16 of the first sleeve part 11).

At the extension end 20 of the second sleeve part 12, the terminal portion 23 may have some suitable connecting means to connect the extension end 20 of the second sleeve part 12 with some external tube or other equipment, typically belonging to the system or arrangement which portion the object 50 forms. Thus, for providing this, the terminal portion 23 at the extension end 20 may, for instance, comprise outer or inner threads, be weldable, solderable or bondable, or have standard dimensions so that universal tube connectors can be applied for connecting the terminal portion 23 with an external tube or other equipment to which the tubing led from inside the object 50 is intended to be connected.

When installing the fitting assembly 10 according to figures 1 to 4, the corrugated tube is fitted through the first sleeve part 11 out from its receiving end. In the next phase, the sealing rings 26 are assembled on the first two depressions (i.e. narrower portions of the corrugated tube 40) at outer surface of the corrugated tube 40 when counted from the incoming end 41 of the corrugated tube 40 as can be seen from figures 1 and 4. After that, the incoming end 41 of the corrugated tube it is fitted in to the receiving portion 22 such that the third depression sets at the point where it is just in the front of the coupling end 19 of the second sleeve part 12, such that when the locking ring 27 is installed against the coupling end 19 in the following phase, its inner edge is fitted in to the third depression. After installation of the locking ring 27, the sealing rings 25 are installed on the second sleeve part 12 to the point of the retaining grooves 24, after which the second sleeve part 12 is fitted in to the first sleeve part 11 to the position shown in figures 1 and 4. Alternatively, the sealing rings 25 can be installed earlier, for instance, before installation of the corrugated tube 40 in to the second sleeve part 12. Finally, the retaining pin 18 is fitted through the locking apertures 17 of the first sleeve part 11 such that the it remains behind the edge of the retaining corner 21 on the side of extension end 20. Thus, the retaining pin 18 prevents the second sleeve part 12 from moving out from the first sleeve part 11 through its receiving end 14. After installation of all components of the fitting assembly 10, the corrugated tube 40 extends inside the object 50 from the fitting assembly 10 through the opening 51 such that entire fitting assembly 10 remains outside the object 50. Thus, in case when the corrugated tube 40 is led out from inside the object 50 through the aperture 51, the fitting assembly 10 does not have any components inside the object 50 and hence the fitting assembly 10 reaches the object of the invention as described above. Furthermore, it can be understood, from the above descriptions, that the disassembly of the fitting assembly 10 according to figures 1 to 4 can be carried out by performing the corresponding disassembling operations in the opposite order as the assembling operations described above.

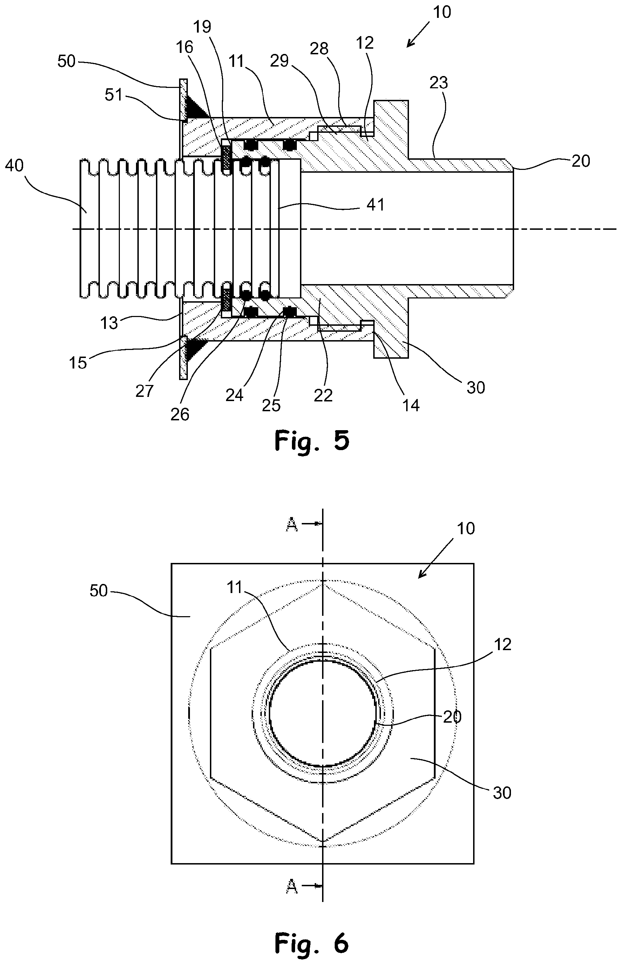

Figures 5 and 6 show a second embodiment of the fitting assembly according to invention. This embodiment is similar to embodiment shown in figures 1 to 4 except that the attachment of the second sleeve part 12 in to the first sleeve part 11 has been realized in different manner. In the embodiment shown in figures 5 and 6, the retaining pin 18 is replaced with an inner threaded portion 28 formed in the inner surface of the first sleeve part 11, an outer threaded portion 29 on the receiving portion 22 of the second sleeve part 12, and a nut member 30 formed between the extension end 20 and the outer threaded portion 29 of the second sleeve part 12. The outer threaded portion 29 having an outer diameter larger than the receiving portion 22, has been arranged to engage with inner threaded portion 28 when the second sleeve part 12 is fitted in to the first sleeve part 11. Thus, when the second sleeve part 12 is installed in the first sleeve portion 11, the second sleeve part 12 is screwed in to the first sleeve part 11 such that the coupling end 19 of the second sleeve part 12 abuts against the locking ring 27. The edge of the nut member 30 being at the side of receiving portion 22 then abuts against the receiving end 14 of the first sleeve part 11 such that a suitable clearance for locking ring 27 remains between the coupling end 19 of the second sleeve part 12 and the locking corner 16 of the first sleeve part 11. In this embodiment the nut member 30 is a standard type of hexagon nut which can be screwed by means of standard tools such as adjustable, fork or socket wrench.

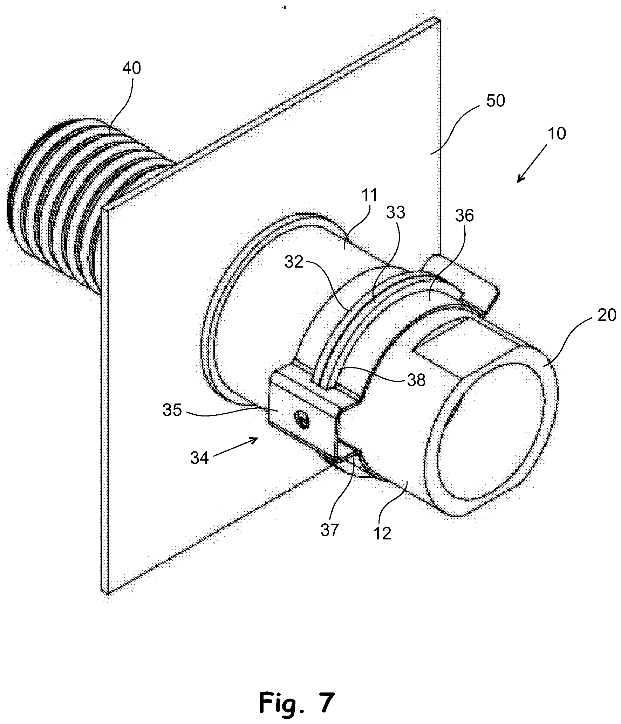

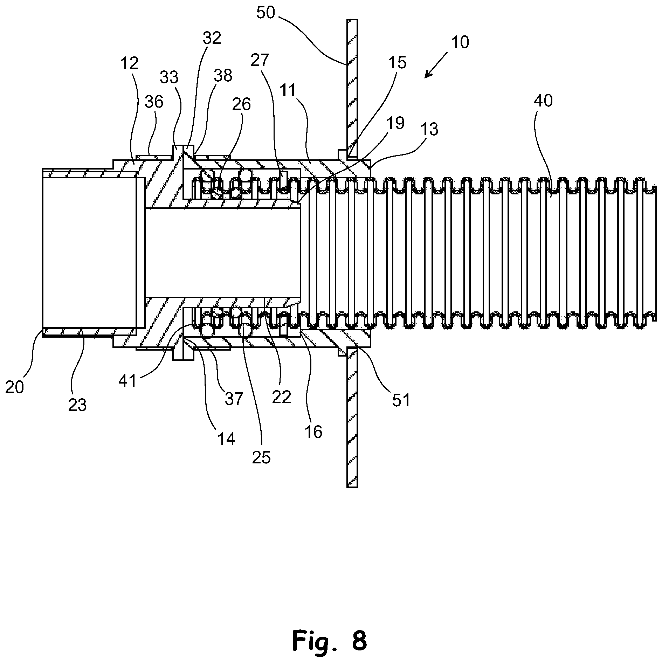

Figures 7 and 8 show a fitting assembly according to an example. The fitting assembly according to figures 7 and 8 differs from embodiment of figures 1 to 4 as well as embodiment of figures 5 to 6 in that the receiving portion 22 of the second sleeve part 12 comprises a fitting section 31 that is fitted in to the corrugated tube 40. In this case, the fitting section 31 has been arranged to extend from the connection point of the first sleeve part 11 and the second sleeve part 12 a suitable distance in to the corrugated tube 40. Due to this difference the both sealing rings used for ensuring tightness between the corrugated tube 40 and the fitting assembly have been placed on the outer and the inner side of the corrugated tube 40. This will simplify the construction, since any retaining grooves need not to be formed either to the first sleeve part 11 or the second sleeve part 12.

Furthermore, the fitting assembly according to figures 7 and 8 differs from the embodiments of figures 1 to 4 and 5 to 6 in a way that the first sleeve part 11 and the second sleeve part 12 are to be attached to each other. The attachment consists of, in this case, one fixing flange 32 at the receiving end 14 of the first sleeve part 11 and an another fixing flange 33 in between the receiving portion 22 and terminal portion 23 of the second sleeve part 12, by means of which the first sleeve part 11 and the second sleeve part 12 are held together. In order to secure the fixing flanges 32 and 33 against each other in way shown in the figures 7 and 8, a special binding element 34 is provided. The binding element 34 is a kind of a locking spring that has a base portion 35 and two arc-like branches 36 and 37. The shape of the branches 36 and 37 conforms with the outer surface of the first sleeve part 11 and the second sleeve part 12 in the vicinity of the fixing flanges 32 and 33. The branch 36 is fitted on one side and the branch 37 on the other side of the first sleeve part 11 and second sleeve part 12 abutting against each other. Both branches 36 and 37 include slots 38, through which the abutting fixing flanges 32 ja 33 are to be fitted when the binding element 34 is assembled on to its place where it retains the first sleeve part 11 and the second sleeve part 12 against each other in the above mentioned manner. Thus, the width of the slots 38 have been designed so that the fixing flanges 32 and 33 can be fitted through the slots 38 only when they are pressed against each other as shown in figure 7. The binding element 34 is preferably made of some enough stiff sheet-like material such as metal, plastic or composite.

The fitting assembly according to invention can be further realized in many ways being different from the above described embodiments. For instance, in such embodiments of the fitting assembly being kind shown in figures 1 to 4 or 5 to 6, the fitting assembly may be realized such that sealing between the corrugated tube and the fitting assembly would be arranged between the outer surface of the corrugated tube and the inner surface of the first sleeve part. In that case, the narrower portion extending from the attachment end of the first sleeve part would be longer than in the embodiments shown in the figures 1 to 4 and 5 to 6. However, the locking ring may be attached between the coupling end of the second sleeve part and the locking corner of the first sleeve part but then the sealing rings between the incoming end being fitted in to the receiving portion of the second sleeve part would not be necessary, although in some embodiments also these could be employed. Also the attachment of the second sleeve part in to the first sleeve part may be accomplished by means of securing means being different from the ones described above. The second sleeve part may be secured to the first sleeve part e.g. by means of separate fixing screws fitted through a fixing holes made to a fixing flange formed to the second sleeve part e.g. to the same position as the nut element is in the embodiment of figures 5 and 6. In such embodiment, the fixing screws may be screwed in to a threaded holes extending from the receiving end of the first sleeve part in to the direction of the attachment end. Furthermore, the material of the fitting assembly may vary in different embodiments of the fitting assembly according to the invention. It is preferably made from some metal such as stainless steel, aluminum, brass or copper. However, also non-metallic materials such as plastic or composite materials may be used. Either the corrugated tubes with which the fitting assembly can be used should not be limited only to corrugated tubes made of some metallic materials such as stainless steel or aluminum. The fitting assembly may be applied for connecting of corrugated tubes made of, for instance, plastic or many kinds of composite materials as well.

Therefore, the fitting assembly according to invention should not be limited to the embodiments described above but can be varied within the scope of the appended claims.

## Claims

1. A fitting assembly (10) for corrugated tubing, the fitting assembly (10) comprising a first sleeve part (11) being attachable to an object (50) to which a corrugated tube (40) is to be connected and a second sleeve part (12) configured to be fitted in to the first sleeve part (11) and to which the corrugated tube (40) is sealably attachable, and in which fitting assembly (10):
- the first sleeve part (11) comprises a receiving end (14) for receiving the second sleeve part (12) and an attachment end (13) being attachable to an opening (51) formed to an object (50) to which the fitting assembly (10) is to be attached;
- the second sleeve part (12) comprises a receiving portion (22) sealably connectable to the first sleeve part (11);
- the fitting assembly (10) comprises attachment means (22, 26, 27) for attaching and sealing the corrugated tube (40) to the second sleeve part (12) such that when the second sleeve part (12) is attached to the first sleeve part (11), the corrugated tube (40) extends outside the fitting assembly (10) through the attachment end (13) of the first sleeve part (11);
- the fitting assembly comprises two sealing members (25) for sealing the connection between the first sleeve part (11) and the second sleeve part (12) and/or the first sleeve part (11) and the corrugated tube (40) which said two sealing members (25) are located in grooves of the second sleeve part (12);
- the fitting assembly (10) comprises further two sealing members (26) for sealing the connection between the second sleeve part (12) and the corrugated tube (40) which said two sealing members (26) for sealing the connection between the second sleeve part (12) and the corrugated tube (40), in use are located between corrugations of said corrugated tube (40);
- the fitting assembly comprises further at least one attachment member (27) of said attachment means for attaching the corrugated tube (40) in to the fitting assembly (10) such that the corrugated tube (40) is sealably connected to the second sleeve part (12); wherein
- the attachment member (27) is a locking ring (27) configured to be fitted in a corrugation of said corrugated tube (40) and between the outer side of the corrugated tube (40) and a locking corner (16) of the first sleeve part (11);
- the coupling end (19) of the second sleeve part (12) abuts against the locking ring (27);
- the locking ring (27) is separate from the sealing members (25, 26) as well as the locking ring is in abutting relationship with both, the first sleeve part (11) and the second sleeve part (12).

2. A fitting assembly (10) according to any of claims 1, wherein the fitting assembly (10) comprises fixing means (17, 18; 28, 29, 30; 32, 33, 34) for attaching the second sleeve part (12) releaseably to the first sleeve part (11).

3. A fitting assembly (10) according to claim 2, wherein the receiving portion (22) has larger inner diameter than outer diameter of the corrugated tube (40) to be fitted in to the fitting assembly (10).

4. A fitting assembly (10) according to claim 3 wherein said two sealing members (26) for sealing the connection between the second sleeve part (12) and the corrugated tube (40) are configured to be fitted between the inner side of the second sleeve part (12) at the receiving portion (22) and the outer side of the portion of the corrugated tube (40) to be fitted in to the receiving portion (22).

5. A fitting assembly (10) according to claim 3 or 4, wherein the first sleeve part (11) has at least one portion where the inner diameter is larger than outer diameter of the receiving portion (22) of the second sleeve part (12) and which said portion extends from receiving end (13) to an locking ridge (16) formed by a portion having smaller inner diameter than the outer diameter of the receiving portion (22).

6. A fitting assembly (10) according to any of the claims 2 to 5 wherein the fixing means (17, 18) comprises a locking pin (18) and at least two apertures (17) formed through the wall of the first sleeve part (11) such that the locking pin (18) can be fitted from outside the first sleeve part (11) behind a retaining corner (21) or in to a retaining groove formed on the outer side of the second sleeve part (12) and thereby preventing the movement of the second sleeve part (12) in respect to the first sleeve part (11).

7. A fitting assembly (10) according to any of claims 2 to 5, wherein the fixing means (28, 29, 30) comprise outer threads (29) formed on the outer side of the second sleeve part (12) and inner threads (28) formed on the inner side of the first sleeve part (11) and wherein the outer threads (29) of the second sleeve part (12) are configured to engage with the inner threads (28) of the first sleeve part (11) when the second sleeve part (12) is fitted in to the first sleeve part (11).

8. A fitting assembly (10) according to claim 2, wherein the receiving portion (22) has smaller outer diameter than the inner diameter of the corrugated tube (40) to be fitted in to the fitting assembly (10).

9. A fitting assembly (10) according to claim 8, wherein said two sealing members (25) for sealing the connection between the first sleeve part (11) and the second sleeve part (12) and/or the first sleeve part (11) and the corrugated tube (40) are configured to be fitted between the outer surface of the second sleeve part (12) at the receiving portion (22) and inner side of the corrugated tube (40) to be connected to the receiving portion (22) of the second sleeve part (12).

10. A fitting assembly (10) according to claim any of claims 2, 8 or 9, wherein the fixing means (32, 33, 34) comprise two fixing flanges (32, 33), one (32) at the first sleeve part (11) and an another (33) at the second sleeve part (12) as well as a spring element (34) releasably attachable on the first sleeve part (11) and the second sleeve part (12), and wherein the spring element (34) is configured to secure the fixing flanges (32, 33) against each other to attach the first sleeve part (11) and the second sleeve part (12) to each other.

## Patentansprüche

1. Eine Armaturenanordnung (10) für gewellte Rohre, wobei die Armaturenanordnung (10) ein erstes Hülsenteil (11) aufweist, das an ein Objekt (50) anfügbar ist, mit dem ein gewelltes Rohr (40) verbunden wird, und ein zweites Hülsenteil (12), das konfiguriert ist, um in das erste Hülsenteil (11) eingebaut zu werden und an das das gewellte Rohr (40) dichtend angefügt werden kann, und wobei in der Armaturenanordnung (10):
- das erste Hülsenteil (11) ein Aufnahmeende (14) zur Aufnahme des zweiten Hülsenteils (12) und ein Befestigungsende (13) aufweist, das an einer Öffnung (51) anfügbar ist, die an einem Objekt (50) ausgebildet ist, an das die Armaturenanordnung (10) angefügt wird;
- das zweite Hülsenteil (12) einen Aufnahmeabschnitt (22) aufweist, der dichtend an das erste Hülsenteil (11) anfügbar ist;
- die Armaturenanordnung (10) Befestigungsmittel (22, 26, 27) zum Anfügen und Abdichten des gewellten Rohres (40) am zweiten Hülsenteil (12) aufweist, so dass sich, wenn das zweite Hülsenteil (12) am ersten Hülsenteil (11) angefügt ist, das gewellte Rohr (40) außerhalb der Armaturenanordnung (10) durch das Befestigungsende (13) des ersten Hülsenteils (11) erstreckt;
- die Armaturenanordnung zwei Dichtungselemente (25) zum Abdichten der Verbindung zwischen dem ersten Hülsenteil (11) und dem zweiten Hülsenteil (12) und/oder dem ersten Hülsenteil (11) und dem gewellten Rohr (40) aufweist, wobei die beiden Dichtungselemente (25) in Nuten des zweiten Hülsenteils (12) angeordnet sind;
- die Armaturenanordnung (10) darüber hinaus zwei Dichtungselemente (26) zum Abdichten der Verbindung zwischen dem zweiten Hülsenteil (12) und dem gewellten Rohr (40) aufweist, wobei die beiden Dichtungselemente (26) zum Abdichten der Verbindung zwischen dem zweiten Hülsenteil (12) und dem gewellten Rohr (40) bei Verwendung zwischen den Wellungen des gewellten Rohres (40) angeordnet sind;
- die Armaturenanordnung darüber hinaus mindestens ein Befestigungselement (27) der Befestigungsmittel zum Befestigen des gewellten Rohres (40) in der Armaturenanordnung (10) aufweist, so dass das gewellte Rohr (40) mit dem zweiten Hülsenteil (12) dichtend verbunden ist;
wobei
- das Befestigungselement (27) ein Verriegelungsring (27) ist, der konfiguriert ist, um in eine Wellung des gewellten Rohres (40) und zwischen der Außenseite des gewellten Rohres (40) und einer Verriegelungsecke (16) des ersten Hülsenteils (11) eingebaut zu werden;
- das Kupplungsende (19) des zweiten Hülsenteils (12) an dem Verriegelungsring (27) anliegt;
- der Verriegelungsring (27) von den Dichtungselementen (25, 26) getrennt ist und der Verriegelungsring sich in einer aneinanderstoßenden Beziehung zu sowohl dem ersten Hülsenteil (11) als auch dem zweiten Hülsenteil (12) befindet.

2. Armaturenanordnung (10) gemäß Anspruch 1, wobei die Armaturenanordnung (10) Fixiermittel (17, 18; 28, 29, 30; 32, 33, 34) zum Anfügen des zweiten Hülsenteils (12) auf lösbare Weise an dem ersten Hülsenteil (11) aufweist.

3. Armaturenanordnung (10) gemäß Anspruch 2, wobei der Aufnahmeabschnitt (22) einen größeren Innendurchmesser aufweist als der Außendurchmesser des gewellten Rohres (40), das in die Armaturenanordnung (10) eingebaut wird.

4. Armaturenanordnung (10) gemäß Anspruch 3, wobei die beiden Dichtungselemente (26) zum Abdichten der Verbindung zwischen dem zweiten Hülsenteil (12) und dem gewellten Rohr (40) konfiguriert sind, um zwischen die Innenseite des zweiten Hülsenteils (12) am Aufnahmeabschnitt (22) und die Außenseite des Abschnitts des gewellten Rohres (40), das in den Aufnahmeabschnitt (22) eingebaut wird, eingebaut zu werden.

5. Armaturenanordnung (10) gemäß Anspruch 3 oder 4, wobei das erste Hülsenteil (11) mindestens einen Abschnitt aufweist, bei dem der Innendurchmesser größer als der Außendurchmesser des Aufnahmeabschnitts (22) des zweiten Hülsenteils (12) ist und wobei sich dieser Abschnitt vom Aufnahmeende (13) bis zu einem Verriegelungssteg (16) erstreckt, der von einem Abschnitt mit einem kleineren Innendurchmesser als der Außendurchmesser des Aufnahmeabschnitts (22) gebildet ist.

6. Armaturenanordnung (10) gemäß einem der Ansprüche 2 bis 5, wobei die Fixiermittel (17, 18) einen Arretierstift (18) und mindestens zwei Öffnungen (17) aufweisen, die durch die Wand des ersten Hülsenteils (11) derart ausgebildet sind, dass der Arretierstift (18) von außerhalb des ersten Hülsenteils (11) hinter eine Halteecke (21) oder in eine auf der Außenseite des zweiten Hülsenteils (12) ausgebildete Haltenut eingebaut werden kann, und dadurch die Bewegung des zweiten Hülsenteils (12) in Bezug auf das erste Hülsenteil (11) verhindert wird.

7. Armaturenanordnung (10) gemäß einem der Ansprüche 2 bis 5, wobei die Fixiermittel (28, 29, 30) Außengewinde (29), die an der Außenseite des zweiten Hülsenteils (12) ausgebildet sind, und Innengewinde (28) aufweisen, die an der Innenseite des ersten Hülsenteils (11) ausgebildet sind, und wobei die Außengewinde (29) des zweiten Hülsenteils (12) konfiguriert sind, um mit den Innengewinden (28) des ersten Hülsenteils (11) in Eingriff zu kommen, wenn das zweite Hülsenteil (12) in das erste Hülsenteil (11) eingebaut wird.

8. Armaturenanordnung (10) gemäß Anspruch 2, wobei der Aufnahmeabschnitt (22) einen kleineren Außendurchmesser aufweist als der Innendurchmesser des gewellten Rohres (40), das in die Armaturenanordnung (10) einzubauen ist.

9. Armaturenanordnung (10) gemäß Anspruch 8, wobei die beiden Dichtungselemente (25) zum Abdichten der Verbindung zwischen dem ersten Hülsenteil (11) und dem zweiten Hülsenteil (12) und/oder dem ersten Hülsenteil (11) und dem gewellten Rohr (40) konfiguriert sind, um zwischen die Außenfläche des zweiten Hülsenteils (12) am Aufnahmeabschnitt (22) und die Innenseite des gewellten Rohres (40) eingebaut zu werden, welches mit dem Aufnahmeabschnitt (22) des zweiten Hülsenteils (12) verbunden wird.

10. Armaturenanordnung (10) gemäß einem der Ansprüche 2, 8 oder 9, wobei die Fixiermittel (32, 33, 34) zwei Fixierflansche (32, 33) aufweisen, einen (32) am ersten Hülsenteil (11) und einen weiteren (33) am zweiten Hülsenteil (12), sowie ein Federelement (34), das lösbar an dem ersten Hülsenteil (11) und dem zweiten Hülsenteil (12) anfügbar ist, und wobei das Federelement (34) konfiguriert ist, um die Fixierflansche (32, 33) gegeneinander zu sichern, um das erste Hülsenteil (11) und das zweite Hülsenteil (12) miteinander zu verbinden.

## Revendications

1. Ensemble raccord (10) pour tube ondulé, l'ensemble raccord (10) comprenant une première partie de manchon (11) apte à être fixée à un objet (50) auquel un tube ondulé (40) doit être relié et une seconde partie de manchon (12) configurée pour se raccorder dans la première partie de manchon (11) et à laquelle le tube ondulé (40) est apte à être fixé de manière étanche, et dans lequel ensemble raccord (10) :
- la première partie de manchon (11) comprend une extrémité de réception (14) pour recevoir la seconde partie de manchon (12) et une extrémité de fixation (13) apte à être fixée à une ouverture (51) formée sur un objet (50) auquel l'ensemble raccord (10) doit être fixé ;
- la seconde partie de manchon (12) comprend une partie de réception (22) apte à être reliée de manière étanche à la première partie de manchon (11) ;
- l'ensemble raccord (10) comprend des moyens de fixation (22, 26, 27) pour fixer et rendre étanche le tube ondulé (40) avec la seconde partie de manchon (12) de sorte que lorsque la seconde partie de manchon (12) est fixée à la première partie de manchon (11), le tube ondulé (40) s'étend à l'extérieur de l'ensemble raccord (10) à travers l'extrémité de fixation (13) de la première partie de manchon (11) ;
- l'ensemble raccord comprend deux éléments d'étanchéité (25) pour rendre étanche la liaison entre la première partie de manchon (11) et la seconde partie de manchon (12) et/ou la première partie de manchon (11) et le tube ondulé (40), les deux éléments d'étanchéité (25) sont situés dans des rainures de la seconde partie de manchon (12) ;
- l'ensemble raccord (10) comprend en outre deux éléments d'étanchéité (26) pour rendre étanche la liaison entre la seconde partie de manchon (12) et le tube ondulé (40), les deux éléments d'étanchéité (26) pour rendre étanche la liaison entre la seconde partie de manchon (12) et le tube ondulé (40), en utilisation, sont situés entre des ondulations dudit tube ondulé (40) ;
- l'ensemble raccord comprend en outre au moins un élément de fixation (27) desdits moyens de fixation pour fixer le tube ondulé (40) dans l'ensemble raccord (10) de sorte que le tube ondulé (40) est relié de manière étanche à la seconde partie de manchon (12) ;
dans lequel
- l'élément de fixation (27) est une bague de verrouillage (27) configurée pour être raccordée dans une ondulation dudit tube ondulé (40) et entre le côté externe du tube ondulé (40) et un coin de verrouillage (16) de la première partie de manchon (11) ;
- l'extrémité de couplage (19) de la seconde partie de manchon (12) est en butée contre la bague de verrouillage (27) ;
- la bague de verrouillage (27) est séparée des éléments d'étanchéité (25, 26) de même que la bague de verrouillage est en relation de butée avec à la fois la première partie de manchon (11) et la seconde partie de manchon (12).

2. Ensemble raccord (10) selon la revendication 1, dans lequel l'ensemble raccord (10) comprend des moyens de fixation (17, 18 ; 28, 29, 30 ; 32, 33, 34) pour fixer la seconde partie de manchon (12) de manière libérable à la première partie de manchon (11).

3. Ensemble raccord (10) selon la revendication 2, dans lequel la partie de réception (22) possède un plus grand diamètre interne que le diamètre externe du tube ondulé (40) à raccorder dans l'ensemble raccord (10).

4. Ensemble raccord (10) selon la revendication 3, dans lequel lesdits deux éléments d'étanchéité (26) pour rendre étanche la liaison entre la seconde partie de manchon (12) et le tube ondulé (40) sont configurés pour être raccordés entre le côté interne de la seconde partie de manchon (12) au niveau de la partie de réception (22) et le côté externe de la partie du tube ondulé (40) à raccorder dans la partie de réception (22).

5. Ensemble raccord (10) selon la revendication 3 ou 4, dans lequel la première partie de manchon (11) possède au moins une partie où le diamètre interne est plus grand que le diamètre externe de la partie de réception (22) de la seconde partie de manchon (12) et ladite partie s'étend de l'extrémité de réception (13) à une arête de verrouillage (16) formée par une partie ayant un diamètre interne plus petit que le diamètre externe de la partie de réception (22).

6. Ensemble raccord (10) selon l'une quelconque des revendications 2 à 5 dans lequel les moyens de fixation (17, 18) comprennent une goupille de verrouillage (18) et au moins deux ouvertures (17) formées à travers la paroi de la première partie de manchon (11) de sorte que la goupille de verrouillage (18) peut être raccordée de l'extérieur de la première partie de manchon (11) derrière un coin de retenue (21) ou dans une rainure de retenue formée sur le côté externe de la seconde partie de manchon (12) et empêchant ainsi le mouvement de la seconde partie de manchon (12) par rapport à la première partie de manchon (11).

7. Ensemble raccord (10) selon l'une quelconque des revendications 2 à 5, dans lequel les moyens de fixation (28, 29, 30) comprennent des filets externes (29) formés sur le côté externe de la seconde partie de manchon (12) et des filets internes (28) formés sur le côté interne de la première partie de manchon (11) et dans lequel les filets externes (29) de la seconde partie de manchon (12) sont configurés pour venir en prise avec les filets internes (28) de la première partie de manchon (11) lorsque la seconde partie de manchon (12) est raccordée dans la première partie de manchon (11).

8. Ensemble raccord (10) selon la revendication 2, dans lequel la partie de réception (22) possède un plus petit diamètre externe que le diamètre interne du tube ondulé (40) à raccorder dans l'ensemble raccord (10).

9. Ensemble raccord (10) selon la revendication 8, dans lequel lesdits deux éléments d'étanchéité (25) pour rendre étanche la liaison entre la première partie de manchon (11) et la seconde partie de manchon (12) et/ou la première partie de manchon (11) et le tube ondulé (40) sont configurés pour être raccordés entre la surface externe de la seconde partie de manchon (12) au niveau de la partie de réception (22) et le côté interne du tube ondulé (40) à relier à la partie de réception (22) de la seconde partie de manchon (12).

10. Ensemble raccord (10) selon l'une quelconque des revendications 2, 8 ou 9, dans lequel les moyens de fixation (32, 33, 34) comprennent deux brides de fixation (32, 33), une (32) au niveau de la première partie de manchon (11) et une autre (33) au niveau de la seconde partie de manchon (12) ainsi qu'un élément ressort (34) apte à être fixé de manière libérable sur la première partie de manchon (11) et la seconde partie de manchon (12), et dans lequel l'élément ressort (34) est configuré pour fixer les brides de fixation (32, 33) l'une contre l'autre pour fixer la première partie de manchon (11) et la seconde partie de manchon (12) l'une à l'autre.
